# EUROPÄISCHE PATENTSCHRIFT

(11) **EP 2 510 188 B1**
(45) Veröffentlichungstag und Bekanntmachung des Hinweises auf die Patenterteilung: **14.06.2017**
(21) Anmeldenummer: 10788299.5
(22) Anmeldetag: 02.12.2010
(51) Int. Cl.: E21B 43/24

(54) **VORRICHTUNG UND VERFAHREN ZUR GEWINNUNG, INSBESONDERE IN-SITU-GEWINNUNG, EINER KOHLENSTOFFHALTIGEN SUBSTANZ AUS EINER UNTERIRDISCHEN LAGERSTÄTTE**
DEVICE AND METHOD FOR THE RECOVERY, IN PARTICULAR IN SITU RECOVERY, OF A CARBONACEOUS SUBSTANCE FROM SUBTERRANEAN FORMATIONS
DISPOSITIF ET PROCÉDÉ POUR EXTRAIRE, EN PARTICULIER IN SITU, UNE SUBSTANCE CONTENANT DU CARBONE PRÉSENTE DANS UN GISEMENT SOUTERRAIN

(30) Priorität: 22.02.2010 DE 102010008779
(43) Veröffentlichungstag der Anmeldung: 17.10.2012
(73) Patentinhaber: Siemens Aktiengesellschaft, 80333 München (DE)
(72) Erfinder: DIEHL, Dirk, 91052 Erlangen (DE); HUBER, Norbert, 91052 Erlangen (DE); TORLAK, Muris, 90471 Nürnberg (DE); WACKER, Bernd, 91074 Herzogenaurach (DE)
(86) Internationale Anmeldenummer: PCT/EP2010/068731
(87) Internationale Veröffentlichungsnummer: WO 2011/101055

(56) Entgegenhaltungen:
- CA-A1- 2 304 938
- DE-A1-102007 008 292
- DE-B3-102007 040 605
- DE-B3-102007 040 606
- US-A- 4 037 655
- US-A- 4 084 637
- US-A- 4 362 610
- US-A1- 2003 141 053
- US-A1- 2006 151 166

## Beschreibung

Die Erfindung betrifft eine Anlage zur In-Situ-Gewinnung einer kohlenstoffhaltigen Substanz aus einer unterirdischen Lagerstätte unter Herabsetzung von deren Viskosität. Eine solche Vorrichtung dient insbesondere zur Förderung von Bitumen oder Schwerstöl aus einem Reservoir unter einem Deckgebirge, wie es bei Ölschiefer und/oder Ölsandvorkommen beispielsweise in Kanada gegeben ist.

Zur Förderung von Schwerstölen oder Bitumen aus den bekannten Ölsand- oder Ölschiefervorkommen muss deren Fließfähigkeit erheblich erhöht werden. Dies kann durch Temperaturerhöhung des Vorkommens (Reservoirs) erreicht werden.

Das am weitesten verbreitete und angewendete In-Situ-Verfahren zur Förderung von Bitumen oder Schwerstöl ist das SAGD(Steam Assisted Gravity Drainage)-Verfahren. Dabei wird Wasserdampf unter hohem Druck durch ein innerhalb des Flözes horizontal verlaufendes Rohr eingepresst. Das aufgeheizte, geschmolzene und vom Sand oder Gestein abgelöste Bitumen oder Schwerstöl sickert zu einem zweiten etwa 5 m tiefer gelegenem Rohr, durch das die Förderung des verflüssigten Bitumens oder Schwerstöl erfolgt, wobei der Abstand von Injektor und Produktionsrohr abhängig von Reservoirgeometrie ist.

Der Wasserdampf hat dabei mehrere Aufgaben gleichzeitig zu erfüllen, nämlich die Einbringung der Heizenergie zur Verflüssigung, das Ablösen vom Sand sowie den Druckaufbau im Reservoir, um einerseits das Reservoir geomechanisch für Bitumentransport durchlässig zu machen (Permeabilität) und andererseits die Förderung des Bitumens ohne zusätzliche Pumpen zu ermöglichen.

Das SAGD-Verfahren startet, indem für beispielsweise drei Monate durch beide Rohre Dampf eingebracht wird, um zunächst möglichst schnell das Bitumen im Raum zwischen den Rohren zu verflüssigen. Danach erfolgt die Dampfeinbringung nur noch durch das obere Rohr und die Förderung durch das untere Rohr kann beginnen.

In der deutschen Patentanmeldung DE 10 2007 008 292 A1 wird bereits angegeben, dass das dazu üblicherweise verwendete SAGD-Verfahren mit einer induktiven Heizvorrichtung komplettiert werden kann. Des Weiteren wird in der deutschen Patentanmeldung DE 10 2007 036 832 A1 eine Vorrichtung beschrieben, bei der parallel verlaufende Induktoren- bzw. Elektroden-Anordnungen vorhanden sind, die oberirdisch an einen Oszillator bzw. Umrichter angeschlossen sind.

Bei den älteren, deutschen Patentanmeldungen
DE 10 2007 008 292 A1 und DE 10 2007 036 832 A1 wird also vorgeschlagen, den Dampfeintrag mit einer induktiven Beheizung der Lagerstätte zu überlagern. Dabei kann gegebenenfalls weiter zusätzlich auch noch eine resistive Beheizung zwischen zwei Elektroden erfolgen.

Bei den vorbeschriebenen Einrichtungen muss immer die elektrische Energie über einen elektrischen Hinleiter und einen elektrischen Rückleiter geführt werden. Dazu ist ein nicht unerheblicher Aufwand notwendig.

Bei den genannten älteren Patentanmeldungen werden einzelne Induktorpaare aus Hin- und Rückleiter oder Gruppen von Induktorpaaren in verschiedenen geometrischen Konfigurationen bestromt, um das Reservoir induktiv zu erhitzen. Dabei wird innerhalb des Reservoirs von einem konstanten Abstand der Induktoren ausgegangen, was bei homogener elektrischer Leitfähigkeitsverteilung zu einer konstanten Heizleistung entlang der Induktoren führt. Beschrieben sind die räumlich eng beieinander geführten Hin- und Rückleiter in den Abschnitten, in denen das Deckgebirge durchstoßen wird, um dort die Verluste zu minimieren.

Eine Variation der Heizleistung entlang der Induktoren kann, wie in den älteren Anmeldungen beschrieben, speziell durch abschnittsweise Injektion von Elektrolyten erfolgen, womit die Impedanz verändert wird. Dies setzt entsprechend Elektrolytinjektionsvorrichtungen voraus, deren Installation aufwendig oder kostspielig sein kann.

Aus der Patentanmeldung CA 2304938 A1 ist bekannt, dass ein flüssiges Lösungsmittels über eine koaxiale Anordnung eines Ölproduktionsrohrs und einer dieses umgebende Flüssigkeitszuführung ins Reservoir geleitet werden kann, wobei in einem Abschnitt im Reservoir Spulen vorgesehen sein können, die ein Verdampfen des Lösungsmittels bewirken sollen, so dass das nun heiße gasförmige Lösungsmittel durch einen geschlitzten Mantel in einen den Mantel umgebenden Hohlraum im Reservoir eindringen kann. Die Spulen wirken dabei direkt auf das flüssige Lösungsmittel noch innerhalb der Flüssigkeitszuführung, so dass es bereits in der Flüssigkeitszuführung in gasförmigen Zustand übergeht. Das gasförmige Lösungsmittel kann sich dann innerhalb des Hohlraums verteilen und in Kontakt mit den kalten und viskosen Kohlenwasserstoffen im Reservoir kommen.

Davon ausgehend ist es Aufgabe der Erfindung, die vorbeschriebene Einrichtung für eine induktive Beheizung eines Reservoirs weiter zu optimieren.

Die Aufgabe wird erfindungsgemäß durch die Merkmale der unabhängigen Patentansprüche gelöst. Vorteilhafte Weiterbildungen und Ausgestaltungen der Erfindung sind in den Unteransprüchen angegeben.

Erfindungsgemäß ist eine Vorrichtung und Verfahren zur Förderung von einer kohlenwasserstoffhaltigen Substanz, insbesondere Bitumen oder Schwerstöl, aus einem Reservoir vorgesehen, wobei das Reservoir mit Wärmeenergie zur Verringerung der Viskosität der Substanz beaufschlagbar ist, wozu wenigstens eine Leiterschleife zur induktiven Bestromung als elektrische und/oder elektromagnetische Heizung vorgesehen ist. Zusätzlich ist eine Fluidführung zum Transportieren und Einleiten eines Lösungsmittel-Fluids - im Folgenden auch kurz lediglich als "Fluid" bezeichnet - ins Reservoir vorgesehen, zum Zweck der weiteren Verringerung der Viskosität der Substanz und/oder ihrer Verdrängung aus dem Reservoir. Die Fluidführung ist perforiert, so dass bei Zuführung des Lösungsmittel-Fluids das Lösungsmittel-Fluid über eine Perforation aus der Fluidführung in das Reservoir eindringt. Weiterhin weist die Perforation Löcher auf, die in Form und/oder Größe und/oder Verteilung derart ausgestaltet sind, dass bei Zuführung des Lösungsmittel-Fluids unter vorgegebenem Druck das Lösungsmittel-Fluid verteilt über eine Länge der Fluidführung durch die Perforation in eine Umgebung der Fluidführung ins Reservoir abgegeben wird.

Erfindungsgemäß handelt es sich also um eine "in-situ"-Förderung, also die Förderung der kohlenwasserstoffhaltigen Substanz direkt aus dem Reservoir, in dem diese Substanz angereichert ist, ohne das Reservoir im Tagebau abzubauen. Als Reservoir versteht man vorzugsweise eine Ölsand-Lagerstätte, die unterirdisch zu finden ist.

Erfindungsgemäß ist keine Einbringung von Wasserdampf zum bloßen Erwärmen des Reservoirs vorgesehen. Es erfolgt jedoch ein Injizieren von Lösungsmitteln, wobei das Lösungsmittel-Fluid als Gas, als Flüssigkeit oder als Mehrkomponenten- bzw. Mehrphasengemisch ausgebildet sein kann.

Bei der Leiterschleife handelt es sich im Wesentlichen um ein verdrilltes Kabel, dass üblicherweise von einer röhrenförmigen Hülle ummantelt ist. Ein Abschnitt der Leiterschleife entlang der Erstreckung des Kabels wird im Folgenden als Leiter bezeichnet. Als Leiter wird insbesondere ein serieller Resonanzkreis oder ein Teil davon verstanden, welcher in einem kabelartigen Aufbau mit äußerer Isolierung gebracht wird. Diese kann in einer vorteilhaften Ausgestaltung der Erfindung von einer Fluidführung umgeben sein, mittels der das Lösungsmittel-Fluid ins Reservoir injiziert wird. Alternativ kann die Fluidführung für das Lösungsmittel-Fluid getrennt von der Leiterschleife implementiert sein.

Die Fluidführung ist ein ausgedehnter hohler Körper - beispielsweise ein Rohr oder ein Schlauch -, durch den das Lösungsmittel-Fluid transportiert wird.

Durch das Vorsehen einer Fluidführung kann das Lösungsmittel-Fluid in das Reservoir geleitet werden. Je nach Ausgestaltung der Fluidführung können sich dadurch folgende Vorteile ergeben:
i) Verringerung der Viskosität der zu fördernden kohlenwasserstoffhaltigen Substanz - das Bitumen oder das Schweröl - im Reservoir mittels Einleiten des Lösungsmittel-Fluids in das Reservoir.
ii) Erhöhte Verdrängung der kohlenwasserstoffhaltigen Substanz, z.B. des Öls, durch das Einleiten des Fluids in das Reservoir.
   Punkt i) ist deshalb vorteilhaft, als dass eine Verringerung der Viskosität des Öls eine ökonomisch sinnvolle Förderung des Öls erst ermöglicht. Die induktive Beheizung sowie das Einleiten des Lösungsmittels bewirkt beides eine Verringerung der Viskosität.
   Zu Punkt ii): Ein weiteres Problem beim elektromagnetischen induktiven Heizen ist häufig die mangelnde oder unzureichende Verdrängung des Öls aus der Lagerstätte während der Förderung, was die Förderrate beeinträchtigen oder sogar die Förderung zum Stillstand bringen kann. Die Ölverdrängung beim SAGD-Verfahren nach dem Stand der Technik erfolgt durch die Ausdehnung der Wasserdampfkammer in der Lagerstätte. Beim erfindungsgemäß vorgesehenen elektromagnetischen induktiven Heizen ist eine Einbringung von Wasserdampf nicht vorgesehen. Jedoch kann das eingebrachte Lösungsmittel-Fluid selbst zur Verdrängung des Öls verwendet werden.

Gemäß der Erfindung kommen als Lösemittel sowohl Gase - beispielsweise Ethan, Propan, Butan, CO₂, SO₂, usw. - als auch Flüssigkeiten - z.B. Polymere oder Wassergemische mit Polymeren (Polyacrylamide, Xanthan)- oder Wassergemische mit Beimischung von Netzmitteln (z. B. Tenside) in Frage, die sich jeweils in dem Bitumen der Lagerstätte lösen und dessen Viskosität verringern. Außerdem können die Lösemittel kombiniert bzw. gemischt werden - beispielsweise kann Propan als Lösemittel gemischt mit anderen Gasen (z.B. Methan) verwendet werden -, um den für die Verdrängung des Öls benötigten Volumenstrom und Druck zu gewährleisten.

In einer ersten vorteilhaften Ausgestaltung können die Leiterschleife - auch als Induktor bezeichnet - und Fluidführung - im Weiteren auch als Injektor bezeichnet - getrennt ausgebildet sein. Eine oder mehrere Fluidführungen enden im Reservoir und sind derart ausgebildet, dass das Lösungsmittel-Fluid - das Solvent - ins Reservoir eindringen kann. Die Verlegung des Injektors ist sowohl in vertikaler als auch horizontaler Bohrung möglich. Dabei kann der Injektor unterschiedliche Positionen im Bezug auf den Induktor und ein Produktionsrohr haben, z.B. oberhalb des Induktors oder zwischen Paaren von Induktor und Produktionsrohr.

Alternativ kann der Induktor und der Injektor auch koaxial kombiniert werden. Der Induktor kann in ein das Lösemittel führende Rohr - die Fluidführung - verlegt werden, zentral oder exzentrisch positioniert. Weiterhin kann ein Induktor aus mehreren Teileitern bestehen, wobei die Teilleiter des Induktors die Fluidführung umgeben, die für die Zufuhr des Lösemittels verwendet wird.

Vorteilhafterweise kann die Fluidführung als Schlauch und/oder Rohr ausgebildet sein, wobei ein Abschnitt der Leiterschleife - im Folgenden als Leiter bezeichnet - innerhalb des Schlauchs bzw. des Rohrs angeordnet ist, insbesondere so, dass bei Zuführung des Lösungsmittel-Fluids der Leiter vom Fluid umspült wird. Somit ist lediglich eine Bohrung zur Verlegung des Induktors und der Fluidführung nötig.

Insbesondere kann der Schlauch und/oder das Rohr in etwa koaxial - zentriert oder auch exzentrisch - zum Leiter angeordnet sein. Zur Fixierung des Leiters innerhalb des Schlauchs und/oder des Rohrs kann zumindest ein Steg innerhalb des Schlauchs bzw. des Rohrs vorgesehen sein. Entlang einer axialen Richtung des Schlauchs/Rohrs können wiederholt Stege vorgesehen sein, um die Lage des Leiters zu sichern. Alternativ kann ein Steg auch eine axiale Ausdehnung haben, die sich sogar in einer besonderen Ausgestaltung über die gesamte Länge des Schlauchs/Rohrs erstreckt.

Bei einer weiteren koaxialen Ausführungsform kann sich die Fluidführung im Zentrum befinden und kann von einem röhrenförmigen, koaxialen Leiter umgeben. Vorteilhaft dabei ist, dass das Fluid im elektromagnetisch-feldfreien Inneren geführt wird, so dass auch ein elektrisch leitfähiges Fluid keine Erwärmung durch Wirbelströme erfährt.

Alternativ dazu kann der Leiter innerhalb des Schlauchs bzw. des Rohrs auch frei beweglich angeordnet sein, d.h. der Leiter ist unzentriert im Schlauch bzw. im Rohr und auf Mittel zum Fixieren wird verzichtet.

In einer weiteren Ausgestaltung kann die Fluidführung als eine Vielzahl von Schläuchen und/oder Rohren ausgebildet sein. Weiterhin können eine Vielzahl von Kapillaren und/oder ein poröses Material vorgesehen sein, um das Fluid in der Fluidführung zu transportieren. Diese Varianten sind bevorzugt derart angeordnet, dass der Leiter von der Vielzahl von Schläuchen und/oder Rohren und/oder Kapillaren und/oder dem porösen Material umgeben ist, wobei vorzugsweise die Vielzahl von Schläuchen und/oder Rohren und/oder Kapillaren und/oder das poröse Material und der Leiter innerhalb einer gemeinsamen schlauchförmigen Außenhülle angeordnet sind. Diese genannten Mittel zur Führung des Fluids sind insbesondere alle parallel zueinander verlaufend oder verdrillt. Diese Ausgestaltungen können so verstanden werden, dass das Fluid nicht den Leiter direkt umfließt sondern Schläuche/Rohre werden von außen an den Leiter angebracht sind.

Vollständigkeitshalber sei erwähnt, dass auch ein umgekehrter Ansatz denkbar ist, dass sich ein Leiter aus einer Vielzahl an Teilleitern zusammensetzt und diese Teilleiter um die Fluidführung herum angeordnet werden können.

Gemäß der Erfindung ist die Fluidführung perforiert, so dass bei Zuführung eines Fluids das Fluid aus der Fluidführung durch die Perforation in das Reservoir eindringt bzw. eingeleitet wird. Unter Perforation sind beispielsweise Löcher oder Schlitze gemeint, die sich in einer Fluidführung befinden, so dass das Fluid aus dem Inneren der Fluidführung nach Außen in die Umgebung der Löcher oder Schlitze austreten kann. Neben den genannten Löcher und Schlitzen ist es auch möglich, dass die Fluidführung zumindest teilweise aus porösen Material oder Kapillaren besteht, so dass das Fluid durch diese Mittel an die Umgebung abgegeben werden kann.

Vorzugsweise kann die Perforation derart ausgebildet sein und/oder können Mittel vorgesehen sein, dass ein Eindringen von Festkörpern und/oder Sanden aus dem Reservoir im Wesentlichen verhindert wird.

Vorzugsweise soll die Perforation derart ausgebildet sein, dass über die gesamte Länge der Fluidführung - abgesehen von der Zuführung von der Oberfläche zur Zielregion im Reservoir - in jedem Abschnitt die gleiche Menge an Fluid abgegeben wird.

Bei den zuvor beschriebenen Anordnungen, bei denen sich die Fluidführung vom Leiter umgeben ist, z.B. als eine Vielzahl von Teilleitern oder als koaxial Rohr, ist die Perforation vorzugsweise elektrisch isolierend auszuführen, um keine direkte elektrische Verbindung zwischen Leiter und Reservoir über das Fluid herzustellen.

Das Einleiten des Fluids in das Reservoir kann dabei die Viskosität im Reservoir verringern und/oder den Druck im Reservoir erhöhen.

Weiterhin kann ein Druckerhöhungsmittel zum Erhöhen des Drucks des Fluids in der Fluidführung vorgesehen sein, insbesondere eine Pumpe, so dass mittels des Druckerhöhungsmittels eine Bewegung der Flüssigkeit in der Fluidführung erreicht wird und so dass mittels des Druckerhöhungsmittels das Fluid mit erhöhtem Druck in die Fluidführung eingeleitet werden kann. Mit der Pumpe soll insbesondere so viel Druck erzeugt werden, dass eine vorbestimmte Menge an Fluid über die Perforation in das Reservoir eindringt. Mit "erhöhtem Druck" ist somit gemeint, dass ein Umgebungsdruck im Reservoir überwunden werden soll. Der hydrostatische Druck im Reservoir in der Umgebung der Perforation sollte überschritten werden, damit das Fluid austreten kann, was beispielsweise mit einem Druck von 5000 hPa (5 bar) bis 50000 hPa (50 bar) erreicht werden kann.

Im Falle eines gasförmigen Fluids kann ein Kompressor eingesetzt werden, welcher ein oder mehrere Injektionsbohrungen und darin verlegten Fluidführungen speisen kann.
Die Erhöhung des Drucks im Reservoir ist insbesondere vorteilhaft, als dass dadurch die kohlenwasserstoffhaltigen Substanz im Reservoir besser verdrängt wird und/oder ein Unterdruck im Reservoir - aufgrund der Förderung der Substanz - vermieden wird.

Vorzugsweise wird der über die Zuführung angewendete Druck auf das Fluid in der Fluidführung derart an eine vorgegebene Perforation angepasst, dass ein Austreten des Fluids durch die Perforation über einen längeren Anwendungszeitraum gewährleistet ist.

Zur weiteren Erhöhung des Drucks im Reservoir kann ein Ventil eines Förderrohrs zum Wegführen der verflüssigten kohlenwasserstoffhaltigen Substanz aus dem Reservoir geschlossen werden und zu einem späteren Zeitpunkt, abhängig vom Erreichen einer vorgegebenen Zeitspanne oder vom Erreichen eines vorgegebenen Drucks innerhalb des Reservoirs geöffnet werden. Somit kann während der Zeitspanne der Druck erhöht werden, weil kein Material das Reservoir verlässt und zusätzlich ein Fluid eingeleitet wird.

Im Falle der mangelnden Verdrängung bzw. um die Förderung der kohlenwasserstoffhaltigen Substanz aus dem Reservoir zu verbessern ist zusätzliche Einrichtung einer Pumpe in dem Förderrohr vorstellbar.

Vorzugsweise können für die Leiterschleife zwei voneinander getrennte Fluidführungen vorgesehen sein, jeweils für eine Hälfte der Leiterschleife, wobei die beiden Fluidführungen im Reservoir enden, so dass das Fluid vollumfänglich ins Reservoir eingebracht werden kann.

Es wurde bereits erläutert, welche Zusammensetzung das Fluid haben kann, das in das Reservoir eingespeist wird. Hierbei ist es insbesondere vorteilhaft, wenn ein Teil des Fluids zumindest teilweise oder auch vollständig aus dem geförderten Wasser-Öl/Bitumen-Gemisch extrahiert wird, beispielsweise ein Erdgas oder Wasseranteile. Dazu sollte die gewünschte zu fördernde Substanz von dem geförderten Wasser-Öl/Bitumen-Gemisch abgetrennt werden und der gasförmige oder wässrige Rest nachbearbeitet bzw. aufbereitet werden. Dieser Rest kann anschließend wieder in das Reservoir eingebracht werden (d.h. entsprechend eines geschlossenen Kreislaufs).

Die vorliegende Erfindung und deren Weiterbildungen werden nachfolgend im Rahmen eines Ausführungsbeispiels an Hand von Figuren näher erläutert.

Dabei zeigen in schematischer Darstellung
- Figur 1: eine Vorrichtung zum Injizieren eines Fluids ins Reservoir;
- Figur 2: eine perspektivische Darstellung eines Induktors mit Fluidführung;
- Figur 3, 4, 5: Querschnitte von verschiedenen Induktoren mit Fluidführung;
- Figur 6: einen perforierte Fluidführung;
- Figur 7-11: verschiedene Ausgestaltungen der erfindungsgemäßen Vorrichtung.

Sich in den Figuren entsprechende Teile sind jeweils mit denselben Bezugszeichen versehen. Nicht näher ausgeführte Teile sind allgemein bekannter Stand der Technik.

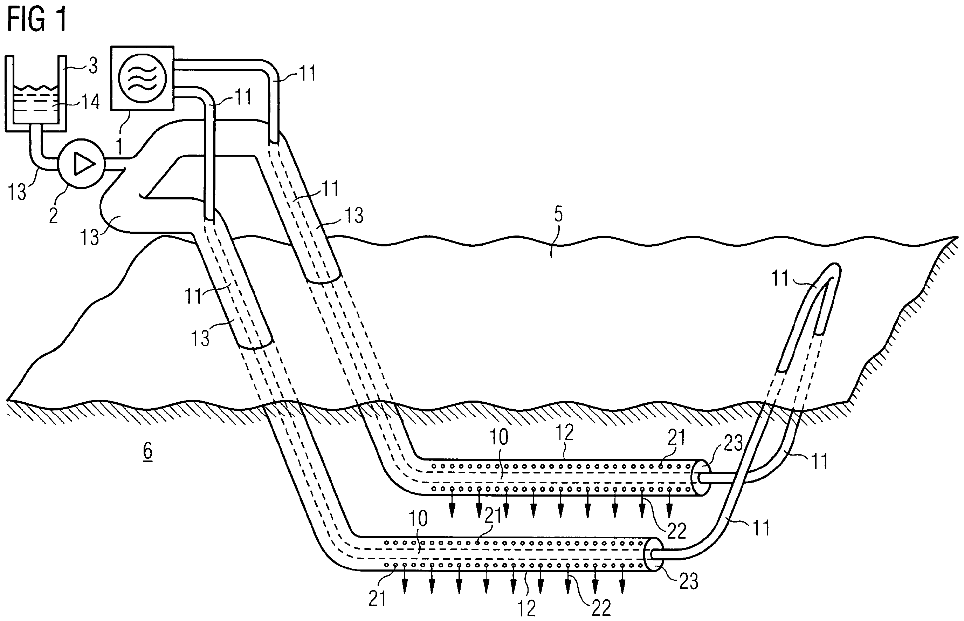

Figur 1 zeigt, schematisch dargestellt, eine Vorrichtung zur In-Situ-Gewinnung einer kohlenwasserstoffhaltigen Substanz aus einer unterirdischen Lagerstätte 6 als Reservoir unter Herabsetzung deren Viskosität, wobei dazu neben einer induktiven Beheizung des Reservoirs mittels Induktoren 10 auch eine Einspeisung von Lösungsmitteln vorgesehen ist. Bei einer solchen Vorrichtung kann es sich beispielsweise um eine Vorrichtung zur Gewinnung von Bitumen aus einem Ölsandvorkommen handeln. Bei der Lagerstätte 6 kann es sich insbesondere um ein Ölsandvorkommen oder ein Ölschiefervorkommen handeln, aus welchem Bitumen oder andere Schweröle gewonnen werden können.

Gemäß Figur 1 liegt eine Leiterschleife vor, die durch eine Elektroversorgung 1 betrieben wird. Abschnitte der Leiterschleife, die als Elektrode wirken, sind als Induktor 10 hervorgehoben. Dies sind die horizontal und parallel in der Lagerstätte 6 verlaufenden Abschnitte.

Die Vorrichtung zur In-Situ-Gewinnung einer kohlenwasserstoffhaltigen Substanz weist den genannten Induktor 10 auf, der in Bohrungen innerhalb der Lagerstätte 6 verläuft. Der Induktor 10 oder Abschnitte von diesem ist als Leiter anzusehen und bildet eine Leiterschleife. Die geschlossene Leiterschleife besteht aus den zwei horizontal in der Lagerstätte 6 verlaufenden Hin- und Rückleitern des Induktors 10, sowie aus Leiterstücken 11 die nicht oder wenig als Heizung wirken und oberirdisch verlaufen bzw. von der Erdoberfläche 5 hinein in die Lagerstätte 6 führen, um den Stromanschluss für den Induktor 10 zu gewährleisten. In der Figur sind beispielsweise beide Schleifenenden der Leiterschleife oberirdisch angeordnet. Auf der rechten Seite in der Figur wird die Schleife einfach geschlossen - siehe Leiterstück 11 in der Figur. Auf der linken Seite befindet sich eine Elektroversorgung 1 inklusive aller benötigten elektrischen Einrichtungen wie Umrichter und Generator, durch die der nötige Strom und die nötige Spannung an die Leiterschleife angelegt wird, damit die Induktoren 10 als Leiter für eine elektrische/elektromagnetische Heizung zur Wärmeerzeugung in der Lagestätte 6 dienen.

Die Induktoren 10 sind gegenüber zumindest Teilen der Lagerstätte 6 als induktive elektrische Heizung wirksam. Bedingt durch die Leitfähigkeit von zumindest Teilen der Lagerstätte 6, kann diese durch die weitgehend konzentrisch um die beiden möglichst parallel verlaufenden Abschnitte des Induktors 10 erwärmt werden.

Bei dem Induktor 10 kann es sich insbesondere um stabförmige metallische Leiter oder um verdrillte metallische Kabel aus einem insbesondere gut leitfähigen Metall handeln, welche als Resonanzkreis ausgebildet werden.

Nicht dargestellt ist eine Produktionsrohrleitung, über die die aus der Lagerstätte 6 extrahierte kohlenstoffhaltige Substanz gesammelt und aus der Lagerstätte 6 heraus bis an eine Erdoberfläche 5 gefördert wird.

Zur Verringerung der Viskosität der zu fördernden Substanz im Reservoir ist nun eine Vorrichtung vorgesehen, mittels der ein Lösungsmittel-Fluid ins Reservoir eingeleitet wird.

Es liegt ein Vorratsbehälter 3 zum Bereitstellen eines Lösungsmittel-Fluids 14 - im Bild als Flüssigkeit angedeutet, jedoch kann es sich auch um ein Gas, um ein Mehrkomponentengasgemisch oder um ein Phasengemisch handeln, das als zu injizierendes Fluid vorgesehen ist. Dieses Fluid 14 wird mittels der Pumpe 2 - bzw. im Falle eines gasförmigen Fluids mittels eines Kompressors - in ein Fluidsystem eingeleitet, dass aus Fluideinleitungen 13 und aus einer Fluidführung 12 besteht. Die Fluidführung 12 soll hierbei die horizontal und parallel in der Lagerstätte 6 verlaufenden Abschnitte des Fluidsystems bezeichnen. Die Fluideinleitungen 13 umfasst gemäß der Figur das Schlauch-/Rohrsystem oberhalb der Erdoberfläche 5 bzw. die Verbindung zur horizontal verlaufenden Fluidführung 12.

Die Zuführung erfolgt im vorliegenden Beispiel im Unterschied zu Figur 1 von links auf der Zeichenebene. Die Fluidführung 12 weist im horizontalen unterirdischen Abschnitt eine Perforation 21 - oder verteilt angeordnete Düsen - auf, durch die das Fluid 22 ins Reservoir austreten kann (in der Figur mittels Pfeile angedeutet). Weiterhin endet im vorliegenden Beispiel die Fluidführung 12 unterirdisch. Hierzu ist ein Abschluss 23 der Fluidführung 12 vorgesehen, wobei dieser Abschluss ebenfalls eine Perforation aufweisen kann.

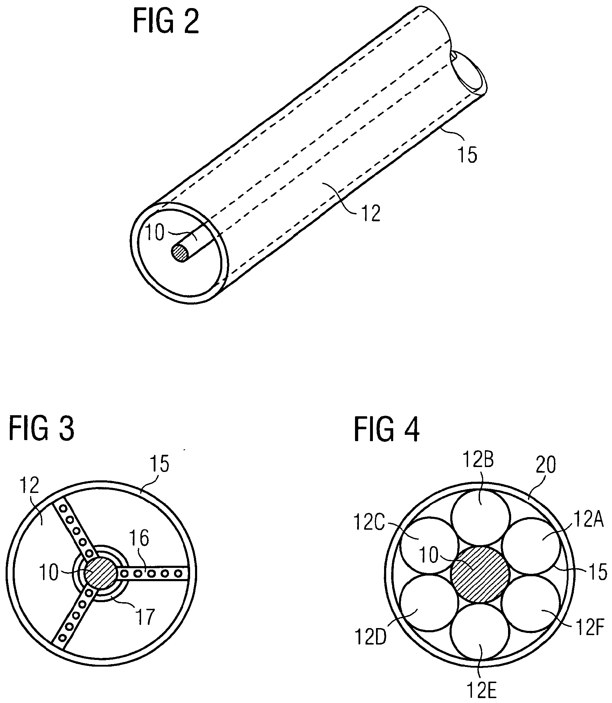

Gemäß der Figur ist die Leiterschleife entlang der Länge des Induktors 10 fast vollständig durch die Fluidführung 12 koaxial ummantelt, so dass der Induktor 10 - bzw. eine Ummantelung des Induktors 10 - im Betrieb vom Fluid umgeben ist. Idealerweise ist der Induktor 10 in die Fluidführung 12 integriert und kann als eine Einheit verlegt werden. Verschiedene Ausgestaltungen von derartigen kombinierten Leitern und Fluidführungen wird später an Hand der Figuren 2-11 erläutert.

Im Betrieb wird das Fluid mittels einer Pumpe 2 oder einer ähnlich wirkenden Vorrichtung ins Fluidsystem eingeleitet. Der Druck bleibt bis zum perforierten Teil der Fluidführung 12 im Wesentlichen unverändert bestehen, da bis zum Beginn der Fluidführung 12 kein Fluidauslass vorgesehen ist. Erreicht nun das zugeführte Fluid den Abschnitt mit der erfindungsgemäßen perforierten Fluidführung 12, wird ein Teil des Fluids über die Perforation 21 in die Lagerstätte 6 eingeleitet. Ein weiterer Teil des Fluids fließt weiter entlang der Fluidführung 12, wobei abschnittsweise stets ein Teil des Fluids über die Perforation 21 abgegeben wird. Es ergibt sich somit eine Verringerung des transportierten Fluids durch das austretende Fluid 22. Der Verlust an Fluid in der Fluidführung 12 wird mittels der Pumpe 2 ersetzt.

Es ergeben sich insbesondere der Effekt, dass das Fluid im Umfeld der Induktoren 10 in die Lagerstätte 6 fließt, wodurch die Viskosität in der Lagerstätte 6 verringert wird und/oder der Druck in der Lagerstätte 6 erhöht wird. Insbesondere kann ein nachlassender Druck aufgrund der Förderung der kohlenwasserstoffhaltigen Substanz ausgeglichen werden. Weiterhin kann, je nach Zusammensetzung des Fluids, auch die elektrische Leitfähigkeit in der Lagerstätte 6 insbesondere im Umfeld der Induktoren 10 erhöht oder erniedrigt werden, was bei der Erhöhung wiederum die Effektivität der Induktoren 10 steigert. Bei Erniedrigung der Leitfähigkeit kann die Heizleistungsdichte in unmittelbarer Umgebung des Induktors 10 reduziert werden, um dessen thermische Belastung zu vermindern.

Der Abschluss 23, die Dimensionen der Fluidführung 12, die Ausgestaltung der Perforation 21 und der auf das Fluid über die Pumpe 2 angewendete Druck sollte bevorzugt so aneinander angepasst werden - insbesondere auch unter Beachtung der vorliegenden Gesteinsformationen und der Tiefe der Lagerstätte -, dass im wesentlichen über die gesamte Länge des horizontal verlaufenden Induktors 10 die genannten Effekte auftreten und/oder das Fluid 22 gleichmäßig in die Lagerstätte 6 austritt.

Der angewendete Druck ist von der Tiefe der Lagerstätte, d.h. von der Distanz der horizontal verlegten Induktoren 10 zur Erdoberfläche 5, abhängig. Der Druck sollte höher als der hydrostatische Druck der entsprechenden Wassersäule sein und liegt beispielsweise im Bereich zwischen 5000 hPa (5 bar) bis 50000 hPa (50 bar).

Druckentlastung in der Lagerstätte 6 wird vorgenommen, indem zu einem Zeitpunkt, bei dem der Druck auf ein oberhalb der Lagerstätte 6 vorliegendes Deckgebirge zu hoch wird, das/die Produktionsrohre - nicht dargestellt in Figur 1 - geöffnet werden. Jedoch kann es vorteilhaft sein, die Produktionsrohre so lange wie möglich geschlossen zu halten um einen hohen Druck im Reservoir 6 zu erreichen.

Zur Optimierung der Drücke können sogenannte "artificial lift pumps" eingesetzt werden, welche Einfluß auf den sogenannten "bottom whole"-Druck geben und mit denen der Transport des produzierten Mediums aus dem Reservoir durch die Produktionsrohre erfolgen kann.

Die Funktion des austretenden Fluids 22 ist somit sowohl die Erniedrigung der Viskosität, die Erhöhung oder Beibehaltung des Drucks in der Lagerstätte 6, als auch die Verdrängung - Ausschwemmung - der zu fördernden Substanz, wobei eine Vermeidung eines Unterdruckes in der Lagerstätte 6 erreicht wird.

Als Lösungsmittel-Fluid kommen beispielsweise Gase - beispielsweise Ethan, Propan, Butan, CO₂, SO₂, usw. - als auch Flüssigkeiten - z.B. Polymere oder Wassergemische mit Polymeren - in Frage. Weiterhin sind Mehrkomponentengemische denkbar. Diese Lösungsmittel treten gemäß dem Verfahren ins Reservoir ein, lösen sich im Bitumen der Lagerstätte und verringern dessen Viskosität. Außerdem können die Lösemittel kombiniert bzw. gemischt werden - beispielsweise kann Propan als Lösemittel mit einem anderen Gas (z.B. Methan) verwendet werden -, um den für die Verdrängung des Öls benötigten Volumenstrom und Druck zu gewährleisten.

In Figur 2 ist ein Abschnitt eines Induktors 10 mit einer umgebenden Fluidführung 12 schematisch in einer perspektivischen Darstellung veranschaulicht, wobei der dargestellt Abschnitt keine Austrittslöcher in der Fluidführung 12 aufweist. Ein in einer schlauchförmig ausgebildeten Ummantelung 15 der Fluidführung 12 zentriert angeordneter Induktor 10 ist von einer Fluidführung 12 umgeben. Die Positionierung des Induktors 10 kann beispielsweise allein durch Kräfte des durchströmenden Fluids in der Fluidführung 12 bestimmt sein. Auf eine Zentrierung kann in diesem Fall, wie in Figur 2 angedeutet, verzichtet werden. Der Induktor 10 ist demgemäß weitestgehend frei beweglich in der Fluidführung 12 und könnte z.B. auch aufgrund der Gewichtskraft von innen auf der Fluidummantelung zu liegen kommen. Für eine spezifische Positionierung oder Fixierung in der Fluidführung 12 werden jedoch im Folgenden verschiedene Ausgestaltungen vorgestellt.

Der Durchmesser des Induktors 10 kann bevorzugt 30 bis 100 mm betragen. Die Ringspaltweite des Induktors 10 wird vorzugsweise 5 mm bis 50 mm betragen.

Nachfolgend werden Querschnitte von mit einer Fluidführung kombinierten Leitern schematisch veranschaulicht. Der Querschnitt erfolgt entlang einer Schnittfläche, die rechtwinklig zur Erstreckung der Fluidführung gebildet wird.

Gemäß Figur 3 erfolgt eine Abstützung des Induktors 10 durch beispielsweise sternförmige Abstandhalter - Stege 16 -, wobei vorzugsweise zwei bis fünf Abstandhalter verwendet werden. Jedoch ist auch eine Lösung mit lediglich einem Steg 16 denkbar. Die Stege 16 sind vorzugsweise an der Innenwand der Ummantelung 15 angebracht und werden im Zentrum über Stabilisatoren 17 verbunden oder direkt an die Außenhülle des Induktors 10 angebracht. Der Induktor 10 befindet sich koaxial im Zentrum der Ummantelung 15 der Fluidführung 12 und wird entweder als Einheit mit der Ummantelung 15 und den Stegen 16 verlegt oder wird nachträglich eingezogen.

Die Fluidführung 12 ergibt sich aus den sich Hohlräumen innerhalb der Ummantelung 15.

Die Breite der Stege 16 kann z.B. im Bereich 5-30 mm liegen, damit die Druckverluste des Fluids in der Fluidführung 12 nicht zu groß werden.

Nach Figur 4 sind im Ringraum - also innerhalb einer Außenhülle 20 - um den Induktor 10 mehrere Schläuche bzw. Rohre 12A, 12B, ..., 12F als Fluidführung 12 vorgesehen.

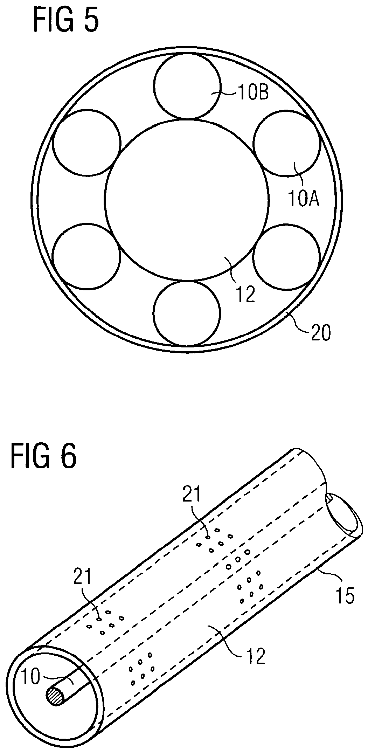

Gemäß Figur 5 ist eine weitere Variante dargestellt, bei der ein zentraler, das Lösungsmittel-Fluid führender Schlauch bzw. Rohr als Fluidführung 12 von den Teilleitern 10A, 10B, ... umgeben wird. Die Teilleiter 10A, 10B, ... stellen dabei zusammen gesehen den Induktor 10 dar. Insgesamt werden die Teilleiter 10A, 10B, ... und die Fluidführung 12 von einer Außenhülle 20 umgeben.

Während vorstehend bisher die reine Führung eines Fluids erläutert wurde, wird im Folgenden auf den weiteren wesentlichen Aspekt eingegangen, dass über die Fluidführung 12 das Fluid in die Lagerstätte 6 abgegeben wird. Beispielsweise über das Ende eines Injektors oder über die Länge der Fluidführung 12. Die in den Figuren 2 bis 5 vorgestellten Querschnitte sind, auch wenn es nicht explizit erwähnt ist, für Abschnitte der Fluidführung 12 anwendbar, in denen das Fluid 22 austreten soll.

In Figur 6 ist in schematischer Form ein Abschnitt eines Induktors 10 mit einer umgebenden Fluidführung in einer perspektivischen Darstellung veranschaulicht, wobei eine Fluidführung 12 perforiert ausgebildet ist, so dass das transportierte Fluid austreten kann, wobei das Fluid als Gas oder Flüssigkeit oder als Mehrphasengemisch austreten kann.

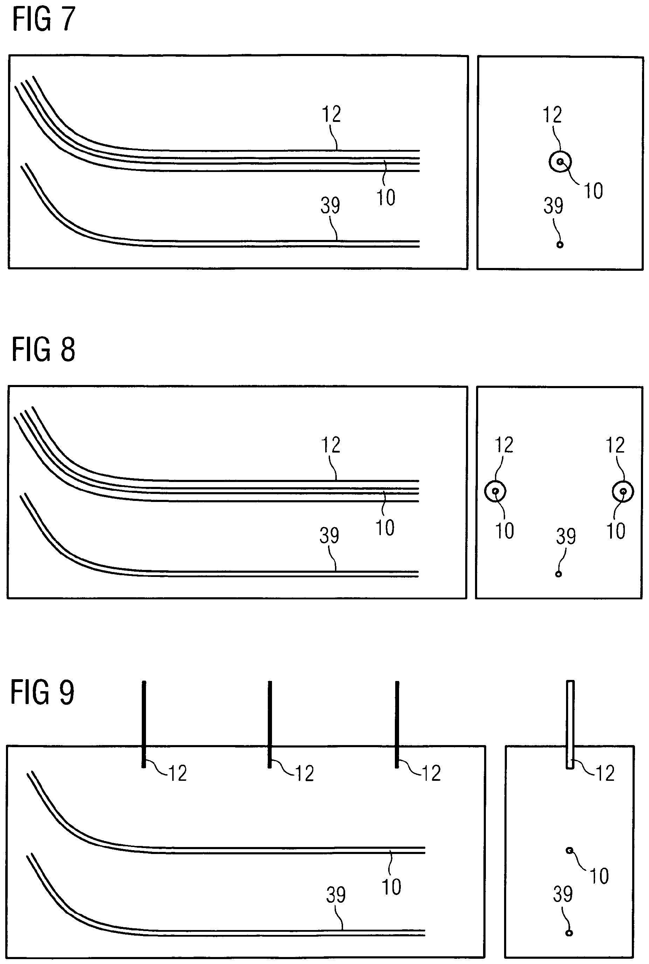

Analog zu Figur 2 ist ein in einer schlauchförmig ausgebildeten Ummantelung 15 zentriert angeordneter Induktor 10 ist von einer Fluidführung 12 umgeben. Im Unterschied zur Ausgestaltung in Figur 2 enthält die Fluidführung 12 bzw. die Ummantelung 15 eine Perforation 12 bestehend aus eine Vielzahl von Löcher und Durchlässen, durch die das transportierte Fluid von innen nach außen dringen kann. Die Größe, Position und Häufigkeit der Löcher ist dabei an die gewünschten Bedingungen anzupassen und durch die Darstellung in Figur 7 nicht als einschränkend zu interpretieren.

Die Löcher der Perforation 21 können dabei symmetrisch am gesamten Umfang der Ummantelung 15 angeordnet sein. Es könnte jedoch auch vorteilhaft sein, eine ungleichmäßige Verteilung vorzusehen. Auch über die Länge der Fluidführung 12 können sich die Verteilung und/oder die Ausgestaltung der Löcher ändern, insbesondere da sich der Druck innerhalb der Fluidführung 12 aufgrund des austretenden Fluids ändern kann.

Ein austretendes Fluid in die Lagerstätte 6 in der Umgebung des Induktors 10 hat dabei insofern einen Vorteil, als dass dadurch auf diese Weise ein Lösemittel in das Reservoir injiziert werden kann, wodurch sich einerseits die Viskosität in der Lagerstätte 6 verringern kann und andererseits sich ein erhöhter Druck innerhalb der Lagerstätte 6 ergeben kann. Beide Effekte ergeben, dass die Förderquote und/oder die Fördergeschwindigkeit der zu fördernden kohlenwasserstoffhaltigen Substanz erhöht werden kann.

In allen Ausgestaltungen der Erfindung - obwohl teilweise nicht dargestellt - ist ein Produktionsrohr zum Abtransportieren der zu fördernden Substanz im Erdreich vorhanden. Über das Produktionsrohr kann ein Produktionsstrom in Form eines Flüssigkeits-Feststoff-Gas-Gemischs - d.h. ein Phasengemisch - an die Erdoberfläche zur Aufbereitung transportiert werden. Im Folgenden werden verschiedene Ausgestaltungen an Hand von schematischen Figuren erläutert, die sich jeweils in der Anordnung der Induktoren, der Fluid-Injektoren und des Produktionsrohrs zueinander unterscheiden.

Gemäß Figur 7 ist analog zu Figur 1 ein kombinierter Injektor-Induktor dargestellt, jeweils aus zwei verschiedenen Perspektiven. Die Fluidführung 12 umgibt erneut den Leiter 10 und verläuft innerhalb der Lagerstätte horizontal. Weiterhin ist ein Produktionsrohr 39 vorgesehen, im wesentlich senkrecht unterhalb des kombinierten Injektor-Induktors.

Figur 8 zeigt eine Abwandlung von Figur 7, in der parallel zueinander verlaufende Leiter 10 - Hin- und Rückleiter - einer Leiterschleife dargestellt sind. Die Fluidführung 12 umgibt jeweils den Hin-/Rückleiter 10 und verläuft innerhalb der Lagerstätte horizontal. In diesem Ausführungsbeispiel wird das Produktionsrohr 39 vorzugsweise mittig zwischen den Leitern 10 angeordnet, erneut jedoch unterhalb der Ebene der verlegten Leiter 10. In einer Schnittebene senkrecht zur Erstreckungsrichtung der Leiter und der Rohre sind die kombinierten Injektor-Induktor-Paare 10,12 und das Produktionsrohr 39 somit im wesentlichen V-förmig angeordnet. Analog kann das Produktionsrohr zwischen zwei Leiterschleifen (z.B. zwischen dem Hinleiter einer ersten Leiterschleife und dem Rückleiter einer anderen zweiten Leiterschleife) ebenso V-förmig positioniert werden.

Die Figuren 9 bis 11 zeigen nun Ausgestaltungen, in denen die Leiter 10 nicht als eine Einheit mit der Fluidführung 12 gebildet werden sondern separat verlegt werden.

Gemäß Figur 9 sind der Leiter 10 und das Produktionsrohr 39 erneut horizontal in der Lagerstätte verlegt. Weiterhin ist ein Produktionsrohr 39 im wesentlich senkrecht unterhalb des Leiters 10 angeordnet. Die Fluidführung 12 wird beispielsweise senkrecht in die Lagerstätte geführt, wobei vorzugsweise mehrere Fluidführungen 12 in Abständen zueinander vorgesehen sein können. Das Lösemittel wird über die Fluidführungen 12 in vertikaler Richtung ins Reservoir transportiert, wobei das Lösemittel vorzugsweise lediglich an einem Endstück der jeweiligen Fluidführung 12 austreten kann. Dieses Endstück ist in einer bevorzugten Ausführungsform in einem gewissen Abstand zum Leiter 10 senkrecht oberhalb des Leiters 10 positioniert.

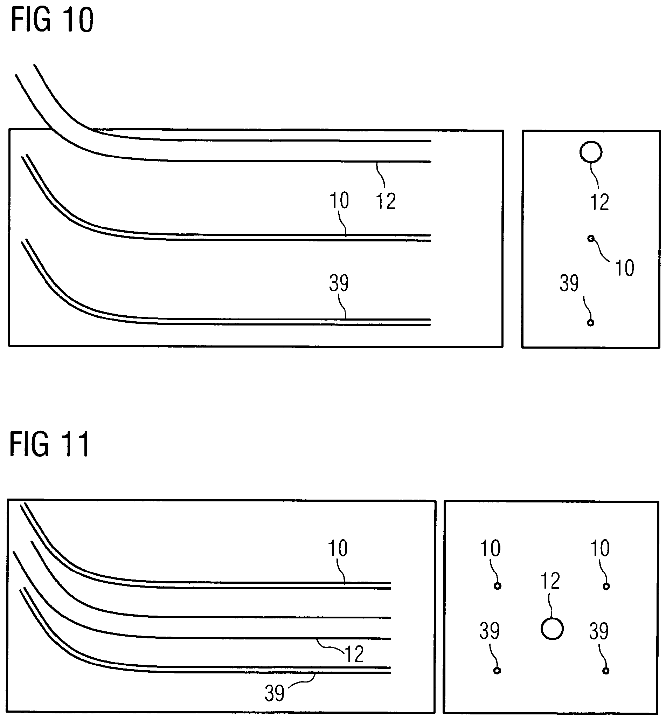

Figur 10 zeigt eine Ausgestaltung, in der der Leiter 10, das Produktionsrohr 39 und die Fluidführung 12 als getrennte Komponenten ausgebildet sind, jedoch in ihrer räumlichen Orientierung im Wesentlichen gleichförmig ausgebildet sind. Alle Komponenten verlaufen innerhalb der Lagerstätte im Wesentlichen horizontal. Die Fluidführung 12 ist senkrecht oberhalb des Leiters 10, der wiederum senkrecht oberhalb des Produktionsrohrs 39 angeordnet ist.

Figur 11 zeigt erneut eine Ausgestaltung, in der der Leiter 10, das Produktionsrohr 39 und die Fluidführung 12 als getrennte Komponenten ausgebildet sind und in ihrer räumlichen Orientierung im wesentlichen gleichförmig ausgebildet sind, wobei alle Komponenten innerhalb der Lagerstätte im wesentlichen horizontal verlaufen. Die Leiterschleife ist als Leiterpaar ausgebildet, wobei die Leiter 10 des Leiterpaars weitgehend in einer horizontalen Ebene angeordnet sind. Es sind zwei Produktionsrohre 39 vorgesehen, die vorzugsweise ebenfalls in einer horizontalen Ebene angeordnet sind, wobei ein jeweiliges der Produktionsrohre 39 im Wesentlichen senkrecht unterhalb eines der Leiter 10 angeordnet ist. Die Fluidführung 12 befindet sich in dieser Ausgestaltung in einem zentralen Bereich zwischen den Leitern 10 und den Produktionsrohren 39, unterhalb der Leiter 10, oberhalb der Produktionsrohre 39, und im Wesentlichen mittig zwischen den Leiterpaaren bzw. Produktionsrohrpaaren.

Allen Ausgestaltungen haben gemeinsam, dass ein elektromagnetisch-induktives Heizen zur Erwärmung von Erdöllagerstätten unterstützt durch Injizieren von Lösemitteln eingesetzt wird.

Die Injektion des Lösemittels ist vorzugsweise kontinuierlich, ohne zeitliche Unterbrechung. Die Injektion des Lösemittels kann nach Bedarf auch für die Vorkonditionierung der Lagerstätte verwendet werden, z.B. die Injektion erfolgt vor dem tatsächlichen, operativen Förderprozess um die Viskosität des Öls in der Nähe des Produktionsrohrs zu reduzieren. Damit wird der Energieverbrauch eines eventuell verwendeten Vorheizens der Lagerstätte reduziert oder sogar vermieden.

Durch die Verwendung von Fluiden - gasförmigen oder flüssigen, einphasig oder als Mischung - zusätzlich zum induktiven Heizen, wird einerseits die Ölviskosität zusätzlich reduziert und anderseits eine Verdrängung des Öls aus der Lagerstätte ermöglicht. Der Gesamtenergieverbrauch für die Förderung des Öls oder Bitumens wird dadurch verringert. Dadurch dass auf das Einleiten von Wasserdampf verzichtet werden kann, ergeben sich ein geringerer Wasserverbrauch und weniger Anlagenaufwand zur Behandlung des produzierten Wassers. Weiterhin kann die schnellere Förderung oder eine höhere Förderquote erreicht werden.

## Patentansprüche

1. Vorrichtung zur Förderung von einer kohlenwasserstoffhaltigen Substanz, insbesondere Bitumen oder Schwerstöl, aus einem Reservoir (6), wobei das Reservoir (6) mit Wärmeenergie zur Verringerung der Viskosität der Substanz beaufschlagbar ist, wozu wenigstens eine Leiterschleife (10, 11) zur induktiven Bestromung als elektrische und/oder elektromagnetische Heizung vorgesehen ist, wobei eine Fluidführung (12) zum Transportieren und Einleiten eines Lösungsmittel-Fluids ins Reservoir (6) zur weiteren Verringerung der Viskosität der Substanz vorgesehen ist,
wobei die Fluidführung (12) perforiert ist, so dass bei Zuführung des Lösungsmittel-Fluids das Lösungsmittel-Fluid über eine Perforation (21) aus der Fluidführung (12) in das Reservoir (6) eindringt,
**dadurch gekennzeichnet, dass** die Perforation (21) Löcher aufweist, die in Form und/oder Größe und/oder Verteilung derart ausgestaltet sind, dass bei Zuführung des Lösungsmittel-Fluids unter vorgegebenem Druck das Lösungsmittel-Fluid verteilt über eine Länge der Fluidführung (12) durch die Perforation (21) in eine Umgebung der Fluidführung (12) ins Reservoir (6) abgegeben wird.

2. Vorrichtung nach Anspruch 1,
**dadurch gekennzeichnet,**
**dass** ein Leiter (10) der Leiterschleife (10, 11) aus mehreren Teilleitern besteht, die in zumindest einem Abschnitt die Fluidführung (12) umgeben,
oder
**dass** ein Leiter (10) der Leiterschleife (10, 11) in zumindest einem Abschnitt von der Fluidführung (12) umgeben ist,
oder
**dass** die Leiterschleife (10, 11) und die Fluidführung (12) separate Komponenten sind, die in unterschiedlichen Regionen des Reservoirs (6) verlegt sind.

3. Vorrichtung nach Anspruch 2,
**dadurch gekennzeichnet,**
**dass** die Fluidführung (12) als Schlauch und/oder Rohr ausgebildet ist, wobei
- der Leiter (10) innerhalb des Schlauchs bzw. des Rohrs angeordnet ist, insbesondere so dass bei Zuführung des Lösungsmittel-Fluids der Leiter (10) vom Lösungsmittel-Fluid umströmt wird, oder
- der Schlauch und/oder das Rohr innerhalb des Leiters (10) angeordnet ist, oder
- der Leiter (10) und die Fluidführung (12) getrennt voneinander ausgebildet sind.

4. Vorrichtung nach Anspruch 3,
**dadurch gekennzeichnet,**
**dass** der Schlauch und/oder das Rohr in etwa koaxial zum Leiter (10) angeordnet sind.

5. Vorrichtung nach einem der Ansprüche 1 bis 4,
**dadurch gekennzeichnet,**
**dass** die Perforation (21) derart ausgebildet ist und/oder dass Mittel vorgesehen sind, dass ein Eindringen von Festkörpern und/oder Sanden aus dem Reservoir (6) in die Fluidführung (12) im Wesentlichen verhindert wird.

6. Vorrichtung nach einem der Ansprüche 1 bis 5,
**dadurch gekennzeichnet,**
**dass** in einer Ausgestaltung einer innenliegenden Fluidführung (12) und eines außenliegenden Leiters (10) die Perforation (21) derart ausgebildet ist, dass eine elektrische Insolation von Löchern der Perforation (21) gegenüber dem Leiter (10) vorgesehen ist.

7. Verfahren zur Förderung von einer kohlenwasserstoffhaltigen Substanz, insbesondere Bitumen oder Schwerstöl, aus einem Reservoir (6), wobei das Reservoir (6) mit Wärmeenergie zur Verringerung der Viskosität der Substanz beaufschlagt wird, wozu wenigstens eine Leiterschleife (10, 11) zur induktiven Bestromung als elektrische und/oder elektromagnetische Heizung vorgesehen ist, wobei ein Lösungsmittel-Fluid durch eine perforierte Fluidführung (12) ins Reservoir (6) transportiert und zur weiteren Verringerung der Viskosität der Substanz über eine Perforation (21) aus der Fluidführung (12) ins Reservoir (6) eingeleitet wird,
**dadurch gekennzeichnet, dass** der Druck des Lösungsmittel-Fluids derart an die vorgegebene Perforation (21) angepasst wird, dass bei Zuführung des Lösungsmittel-Fluids unter diesem Druck das Lösungsmittel-Fluid verteilt über eine Länge der Fluidführung (12) in eine Umgebung der Fluidführung (12) ins Reservoir (6) abgegeben wird.

8. Verfahren nach Anspruch 7,
**dadurch gekennzeichnet,**
**dass** ein Leiter (10) der Leiterschleife (10, 11) in zumindest einem Abschnitt von der Fluidführung (12) umgeben ist durch die das Lösungsmittel-Fluid geleitet wird, die Fluidführung (12) perforiert ist und das das Lösungsmittel-Fluid durch eine Perforation (21) der perforierten Fluidführung (12) hindurchgeleitet wird,
wobei die Fluidführung (12) insbesondere nach einem der Ansprüche 1 bis 6 ausgebildet ist.

9. Verfahren nach einem der Ansprüche 7 oder 8,
**dadurch gekennzeichnet,**
**dass** das Lösungsmittel-Fluid unter Druck in die Fluidführung (12) geleitet wird, so dass innerhalb der Fluidführung (12) im Bereich der Perforation (21) ein Druck größer als ein Druck im Reservoir (6), vorzugsweise ein hydrostatischer Druck, in der Umgebung der Perforation (21) vorliegt.

10. Verfahren nach einem der Ansprüche 7 bis 9,
**dadurch gekennzeichnet,**
**dass** als das Lösungsmittel-Fluid ein Gas oder eine Flüssigkeit oder ein Mehrkomponenten-Gemisch vorgesehen sind, insbesondere umfassend mindestens eines der folgenden Bestandteile:
- Alkane, beispielsweise Methan und/oder Propan und/oder Butan und/oder Ethan;
- Wassergemische mit darin enthaltenen Netzmitteln, z. B. Tenside;
- Wassergemische mit darin enthaltenen Polymeren;
- Säuren;
- Basen;
- SO₂;
- CO₂.

11. Verfahren nach einem der Ansprüche 7 bis 10,
**dadurch gekennzeichnet,**
**dass** ein Ventil eines Förderrohrs zum Wegführen der verflüssigten kohlenwasserstoffhaltigen Substanz aus dem Reservoir (6) geschlossen wird und zu einem späteren Zeitpunkt, abhängig vom Erreichen einer vorgegebenen Zeitspanne oder vom Erreichen eines vorgegebenen Drucks innerhalb des Reservoirs (6) geöffnet wird.

12. Verfahren, nach einem der Ansprüche 7 bis 11,
**dadurch gekennzeichnet, dass** durch Einbringen des Fluids ins Reservoir (6) die elektrischen Eigenschaften des Reservoirs (6) gesteuert wird, insbesondere die elektrische Leitfähigkeit erhöht oder alternativ erniedrigt wird.

## Claims

1. Device for extracting a hydrocarbon-containing substance, in particular bitumen or extra-heavy oil, from a reservoir (6), wherein thermal energy can be applied to the reservoir (6) in order to reduce the viscosity of the substance, for which purpose at least one conductor loop (10, 11) for inductively supplying electric current is provided as a means of electric and/or electromagnetic heating,
wherein a fluid conducting means (12) for transporting and introducing a solvent fluid into the reservoir (6) is provided for the purpose of further reducing the viscosity of the substance,
wherein the fluid conducting means (12) is perforated such that when the solvent fluid is supplied the solvent fluid permeates out of the fluid conducting means (12) into the reservoir (6) by way of a perforation (21), **characterised in that** the perforation (21) has holes which are embodied in terms of shape and/or size and/or distribution in such a way that when the solvent fluid is supplied under a predetermined pressure the solvent fluid is discharged in a distributed manner into the reservoir (6) over a length of the fluid conducting means (12) through the perforation (21) into an environment of the fluid conducting means (12).

2. Device according to claim 1,
**characterised in that**
a conductor (10) of the conductor loop (10, 11) consists of a plurality of subconductors which surround the fluid conducting means (12) in at least one section,
or
a conductor (10) of the conductor loop (10, 11) is surrounded by the fluid conducting means (12) in at least one section,
or
the conductor loop (10, 11) and the fluid conducting means (12) are separate components which are installed in different regions of the reservoir (6).

3. Device according to claim 2,
**characterised in that**
the fluid conducting means (12) is embodied as a tube and/or pipe, wherein
- the conductor (10) is arranged inside the tube or pipe, in particular such that when the solvent fluid is supplied the solvent fluid flows around the conductor (10), or
- the tube and/or pipe is arranged inside the conductor (10), or
- the conductor (10) and the fluid conducting means (12) are embodied separately from each other.

4. Device according to claim 3,
**characterised in that**
the tube and/or pipe are arranged approximately coaxially with respect to the conductor (10).

5. Device according to one of claims 1 to 4,
**characterised in that**
the perforation (21) is embodied in such a way and/or means are provided so that an infiltration of solid bodies and/or sands from the reservoir (6) into the fluid conducting means (12) is substantially prevented.

6. Device according to one of claims 1 to 5,
**characterised in that**
in an embodiment of an internal fluid conducting means (12) and an external conductor (10) the perforation (21) is embodied in such a way that an electrical insulation of holes of the perforation (21) is provided with respect to the conductor (10).

7. Method for extracting a hydrocarbon-containing substance, in particular bitumen or extra-heavy oil, from a reservoir (6), wherein thermal energy is applied to the reservoir (6) in order to reduce the viscosity of the substance, for which purpose at least one conductor loop (10, 11) for inductively supplying current is provided as a means of electric and/or electromagnetic heating, wherein a solvent fluid is transported through a perforated fluid conducting means (12) into the reservoir (6) and is introduced into the reservoir (6) from the fluid conducting means (12) by way of a perforation (21) in order to further reduce the viscosity of the substance,
**characterised in that** the pressure of the solvent fluid is adjusted to the predetermined perforation (21) in such a way that when the solvent fluid is supplied under said pressure the solvent fluid is discharged into the reservoir (6) in a distributed manner over a length of the fluid conducting means (12) into an environment of the fluid conducting means (12).

8. Method according to claim 7,
**characterised in that**
a conductor (10) of the conductor loop (10, 11) is surrounded in at least one section by the fluid conducting means (12) through which the solvent fluid is conducted, the fluid conducting means (12) is perforated and the solvent fluid is conducted through a perforation (21) of the perforated fluid conducting means (12), wherein the fluid conducting means (12) is embodied in particular according to one of claims 1 to 6.

9. Method according to one of claims 7 or 8,
**characterised in that**
the solvent fluid is conducted under pressure into the fluid conducting means (12) such that a pressure greater than a pressure in the reservoir (6), preferably a hydrostatic pressure, is present inside the fluid conducting means (12) in the region of the perforation (21) in the environment of the perforation (21).

10. Method according to one of claims 7 to 9,
**characterised in that**
a gas or a liquid or a multicomponent mixture is provided as the solvent fluid, in particular comprising at least one of the constituents:
- alkane, for example methane and/or propane and/or butane and/or ethane;
- water mixtures with wetting agents contained therein, e.g. tensides;
- water mixtures with polymers contained therein;
- acids;
- bases;
- SO₂;
- CO₂.

11. Method according to one of claims 7 to 10,
**characterised in that**
a valve of a producer well for conveying away the liquefied hydrocarbon-containing substance from the reservoir (6) is closed and opened again at a later time, dependent on a predetermined time interval having elapsed or on a predetermined pressure having been reached within the reservoir (6).

12. Method according to one of claims 7 to 11,
**characterised in that**
the electrical properties of the reservoir (6) are controlled, in particular the electrical conductivity is increased or alternatively reduced, through introducing the fluid into the reservoir (6).

## Revendications

1. Installation d'extraction d'une substance contenant des hydrocarbures, notamment du bitume ou de l'huile lourde, d'un réservoir ( 6 ), le réservoir ( 6 ) pouvant, pour diminuer la viscosité de la substance, être alimenté en énergie calorifique, étant prévue à cet effet au moins une boucle ( 10, 11 ) conductrice pour l'alimentation en courant par induction en tant que chauffage électrique et/ou électromagnétique, un conduit ( 12 ) pour du fluide pour transporter et introduire un solvant-fluide dans le réservoir ( 6 ) étant prévu pour diminuer encore la viscosité de la substance,
dans lequel le conduit ( 12 ) pour du fluide est perforé de manière à ce que, lors de l'envoi du solvant-fluide, le solvant-fluide pénètre par une perforation ( 21 ) du conduit ( 12 ) pour du fluide dans le réservoir ( 6 ),
**caractérisée en ce que** la perforation ( 21 ) a des trous conformés en forme et/ou en dimension et/ou en répartition de manière à ce que, lors de l'envoi du solvant-fluide sous une pression donnée à l'avance, le solvant-fluide, en étant réparti sur un tronçon du conduit ( 12 ) pour du fluide, soit cédé par la perforation ( 21 ) dans ce qui est autour du conduit ( 12 ) pour du fluide au réservoir ( 6 ).

2. Installation sur la revendication 1, **caractérisée en ce qu'**un conducteur ( 10 ) de la boucle ( 10, 11 ) conductrice est constitué de plusieurs sous-conducteurs qui entourent au moins un tronçon du conduit ( 12 ) pour du fluide ou
**en ce qu'**un conducteur ( 10 ) de la boucle ( 10, 11 ) conductrice est entouré d'au moins un tronçon du conduit ( 12 ) pour du fluide
ou
**en ce que** la boucle ( 10, 11 ) conductrice est le conduit ( 12 ) pour du fluide sont des éléments distincts, qui sont posés dans des régions différentes du réservoir ( 6 ).

3. Installation suivant la revendication 2, **caractérisée en ce que** le conduit ( 12 ) pour du fluide est constitué sous la forme d'un conduit souple d'un tuyau, dans laquelle
- le conducteur ( 10 ) est disposé à l'intérieur du conduit souple ou du tuyau, notamment de manière à ce que, lors de l'envoi du solvant-fluide, le solvant-fluide passe autour du conducteur ( 10 ) ou
- le conduit souple et/ou le tuyau est disposé à l'intérieur du conducteur ( 10 ) ou
- le conducteur ( 10 ) et le conduit ( 12 ) pour du fluide sont constitués séparément l'un de l'autre.

4. Installation suivant la revendication 3, **caractérisée en ce que** le conduit souple et/ou le tuyau sont disposés à peu près coaxialement au conducteur ( 10 ).

5. Installation suivant l'une des revendications 1 à 4,
**caractérisée**
**en ce que** la perforation ( 21 ) est constituée et/ou en ce qu'il est prévu des moyens pour empêcher sensiblement une pénétration de corps solides et/ou de sable du réservoir ( 6 ) dans le conduit ( 12 ) pour du fluide.

6. Installation suivant l'une des revendications 1 à 5,
**caractérisée**
**en ce que**, dans un mode de réalisation d'un conduit ( 12 ) pour du fluide se trouvant à l'intérieur et d'un conducteur ( 10 ) se trouvant à l'extérieur, la perforation est constituée de manière à prévoir une isolation électrique de trous de la perforation ( 21 ) par rapport au conducteur ( 10 ).

7. Procédé d'extraction d'une substance hydrocarbonée, notamment de bitume ou d'huile lourde, d'un réservoir ( 6 ), dans lequel on alimente, pour diminuer la viscosité de la substance, le réservoir ( 6 ) en énergie calorifique, en prévoyant à cet effet au moins une boucle ( 10, 11 ) conductrice pour l'alimentation en courant par induction comme chauffage électrique et/ou électromagnétique, dans lequel on transporte un solvant-fluide par un conduit ( 12 ) pour du fluide perforé dans le réservoir ( 16 ) et, pour diminuer encore la viscosité de la substance, on l'introduit du conduit ( 12 ) pour du fluide dans le réservoir ( 6 ) par l'intermédiaire d'une perforation ( 21 ),
**caractérisé en ce que** l'on adapte la pression du solvant-fluide à la perforation ( 21 ) donnée à l'avance de manière à ce que, lors de l'envoi du solvant-fluide sous cette pression, le solvant-fluide, en étant réparti sur un tronçon du conduit ( 12 ) pour du fluide, soit cédé dans ce que qui est autour du conduit ( 12 ) pour du fluide au réservoir ( 6 ).

8. Procédé suivant la revendication 7, **caractérisé en ce qu'**un conducteur ( 10 ) de la boucle ( 11, 10 ) conductrice est entouré dans au moins un tronçon par le conduit ( 12 ) pour du fluide dans lequel passe le solvant-fluide, le conduit ( 12 ) pour du fluide est perforé et le solvant-fluide passe par une perforation ( 21 ) à travers le conduit ( 12 ) pour du fluide perforé, le conduit ( 12 ) pour du fluide étant constitué notamment suivant l'une des revendications 1 à 6.

9. Procédé suivant l'une des revendications 7 ou 8,
**caractérisé en ce que** l'on fait passer le solvant-fluide sous pression dans le conduit ( 12 ) pour du fluide de manière à avoir à l'intérieur du conduit ( 12 ) pour du fluide dans la région de la perforation ( 21 ), une pression plus grande qu'une pression dans le réservoir ( 6 ), de préférence une pression hydrostatique, dans ce qui entoure la perforation ( 21 ).

10. Procédé suivant l'une des revendications 7 à 9, **caractérisé en ce qu'**il est prévu comme solvant-fluide un gaz ou un liquide ou un mélange à plusieurs constituants comprenant notamment au moins l'un des constituants suivants :
- des alcanes, par exemple du méthane et/ou du propane et/ou du butane et/ou de l'éthane ;
- des mélanges aqueux ayant des agents mouillants qui y sont contenus, par exemple des agents tensioactifs ;
- des mélanges aqueux ayant des polymères qui y sont contenus ;
- des acides ;
- des bases ;
- SO₂ ;
- CO₂.

11. Procédé suivant l'une des revendications 7 à 10, **caractérisé en ce que** l'on ferme un robinet d'un tuyau d'extraction pour évacuer la substance hydrocarbonée liquéfiée du réservoir ( 6 ) et à un instant ultérieur on l'ouvre suivant que s'est écoulé un laps de temps donné à l'avance ou qu'est atteinte une pression donnée à l'avance à l'intérieur du réservoir ( 6 ).

12. Procédé suivant l'une des revendications 7 à 11, **caractérisé en ce que**, par l'introduction du fluide dans le réservoir ( 6 ), on règle les propriétés électriques du réservoir ( 6 ), en, augmentant notamment la conductivité électrique ou en variante en la diminuant.
